# EUROPEAN PATENT APPLICATION

(11) **EP 4 488 335 A1**
(43) Date of publication of application: **08.01.2025**
(21) Application number: 23759642.4
(22) Date of filing: 03.02.2023
(51) Int. Cl.: C08L 83/07, C08K 3/013, C08K 3/08, C08K 3/22, C08K 5/5419, C08L 83/05, C08L 83/06

(54) **THERMALLY CONDUCTIVE SILICONE COMPOSITION**

(30) Priority: 28.02.2022 JP 2022029345
(71) Applicant: SHIN-ETSU CHEMICAL CO., LTD., Tokyo 1000005 (JP)
(72) Inventor: KUBONO Toko, Annaka-shi, Gunma 379-0224 (JP); TSUJI Kenichi, Annaka-shi, Gunma 379-0224 (JP)
(74) Representative: Sonnenhauser, Thomas Martin
(86) International application number: PCT/JP2023/003586
(87) International publication number: WO 2023/162636

(57) **Abstract**

The present invention is a thermal conductive silicone composition including: (A) an organopolysiloxane having at least two alkenyl groups per molecule: 100 parts by mass; (B) an organohydrogen polysiloxane having at least two silicon atom-bonded hydrogen atoms per molecule: in an amount such that (the number of Si-H groups in the component (B)) / (the number of alkenyl groups in the component (A)) is 0.5 to 3.0; (C) a filler containing one or more thermal conductive powders: 800 to 20,000 parts by mass; (D) a hydrolyzable organopolysiloxane of formula (1): 20 to 400 parts by mass; (E) an organosilane shown by formula (2), R²_{b}Si(OR³)_{4-b}: 0.01 to 100 parts by mass; (F) platinum or a platinum compound: 0.1 to 500 ppm as platinum atoms relative to the component (A); and (G) a reaction regulator: 0.01 to 1 parts by mass. This provides a thermal conductive silicone composition with high thermal conductivity that does deteriorate in thermal resistance even at high temperatures and high humidity, does not experience an increase in elastic modulus even at high temperatures, and does not generate voids.

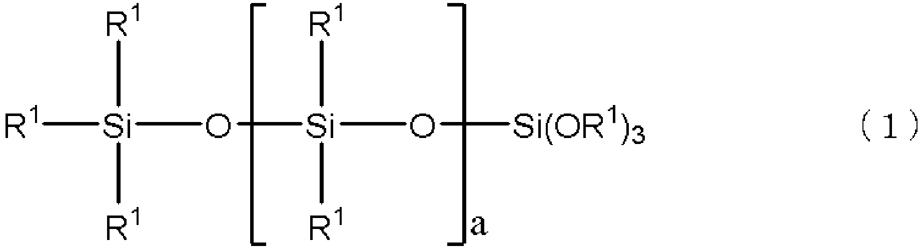

## Description

### TECHNICAL FIELD

The present invention relates to a thermal conductive silicone composition (thermal conductive addition-curable silicone composition).

### BACKGROUND ART

IC packages such as CPUs, which are electronic components mounted on printed circuit boards, may suffer from reduced performance or damages due to temperature rise caused by heat generated during use. Accordingly, conventional techniques have employed heat-dissipating sheets or grease with good thermal conductivity between the IC package and heat-dissipating fins or the like (Patent Documents 1 to 6).

In particular, heat-dissipating grease can deliver high performance as it can conform and adhere to the surfaces of the components such as CPUs and heat-dissipating fins without being affected by irregularities on these surfaces. In recent years, a requirement for higher heat dissipation performance has led to a tendency to use heat-dissipating grease filled with a large amount of thermal conductive filler. However, due to being filled with a large amount of filler, such heat-dissipating grease may progressively deteriorate when exposed to high temperatures and high humidity, resulting in insufficient conformity and adhesion to the surfaces that it covers, with consequent problems of deterioration in thermal resistance and generation of voids.

### CITATION LIST

### PATENT LITERATURE

Patent Document 1: JP 2002-003718 A
Patent Document 2: JP 2002-327116 A
Patent Document 3: JP 2008-031336 A
Patent Document 4: JP 2013-091726 A
Patent Document 5: JP 2015-078296 A
Patent Document 6: JP 2015-183184 A

### SUMMARY OF INVENTION

### TECHNICAL PROBLEM

The present invention has been made to improve the above circumstances and aims to provide a thermal conductive silicone composition with high thermal conductivity that does not deteriorate in thermal resistance even when exposed to high temperatures and high humidity, does not experience an increase in elastic modulus even when exposed to high temperatures, and does not generate voids.

### SOLUTION TO PROBLEM

To solve the above problem, the present invention provides a thermal conductive silicone composition comprising:
(A) an organopolysiloxane having at least two alkenyl groups per molecule: 100 parts by mass;
(B) an organohydrogen polysiloxane having at least two silicon atom-bonded hydrogen atoms per molecule: in an amount such that a ratio of the number of Si-H groups in the component (B) to the number of alkenyl groups in the component (A) ((the number of Si-H groups) / (the number of alkenyl groups)) is 0.5 to 3.0;
(C) a filler containing one or more thermal conductive powders: 800 to 20,000 parts by mass;
(D) a hydrolyzable organopolysiloxane represented by the following general formula (1): 20 to 400 parts by mass: 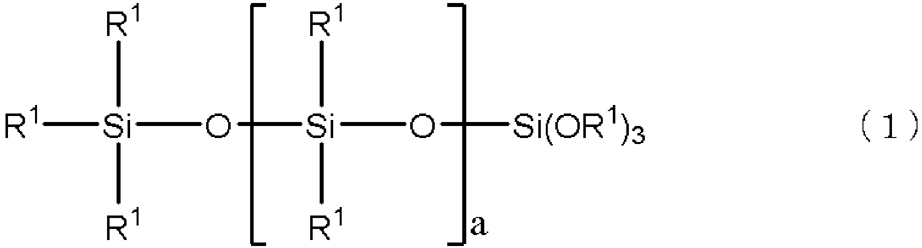 wherein R¹ represents a monovalent hydrocarbon group of 1 to 10 carbon atoms optionally containing a substituent, each R¹ may be the same or different, and "a" is 5 to 100;
(E) an organosilane represented by the following general formula (2): 0.01 to 100 parts by mass:

   R²_{b}Si(OR³)_{4-b} (2)

   wherein R² is one or more groups selected from saturated or unsaturated monovalent hydrocarbon groups, epoxy groups, and (meth)acrylic groups of 14 to 20 carbon atoms optionally containing a substituent, R³ is an alkyl group of 1 to 6 carbon atoms, and "b" is an integer of 1 to 3;
(F) a platinum or platinum compound catalyst: in an amount of 0.1 to 500 ppm as platinum atoms relative to the component (A); and
(G) a reaction regulator: 0.01 to 1 parts by mass.

Such a thermal conductive silicone composition can provide a thermal conductive silicone composition with high thermal conductivity that does not experience a detrimental increase in thermal resistance even when exposed to high temperatures and high humidity, does not experience an increase in elastic modulus even when exposed to high temperatures, and does not generate voids.

Preferably, the component (A) has a viscosity at 25°C of 10 to 100,000 mm²/s.

Such a thermal conductive silicone composition has good storage stability and good extensibility.

Preferably, the component (C) contains an aluminum powder and a zinc oxide powder.

Such a thermal conductive silicone composition has good stability and is free from oil separation.

Preferably, R² of the component (E) is an alkyl group of 14 to 20 carbon atoms.

Such a thermal conductive silicone composition is less likely to volatilize, free from voids at high temperatures, easy to handle, and free from deterioration in low-temperature properties.

Preferably, R² of the component (E) is an alkyl group of 16 to 20 carbon atoms.

Such a thermal conductive silicone composition is even more less likely to volatilize, even more free from voids at high temperatures, easier to handle, and even more free from deterioration in low-temperature properties.

Preferably, the component (G) contains one or more of acetylene compounds, nitrogen compounds, organophosphorus compounds, oxime compounds, and organochloro compounds.

Such a thermal conductive silicone composition can inhibit the progress of hydrosilylation reaction at room temperature and extend shelf life and pot life.

Preferably, the thermal conductive silicone composition has a viscosity at 25°C in a range of 50 to 1,000 Pa·s.

Such a thermal conductive silicone composition does not become non-uniform as its thermal conductive filler does not settle during storage. This ensures its extensibility and avoids any reduction in work efficiency.

Preferably, a cured product of the thermal conductive silicone composition after being subjected to a highly accelerated stress test (130°C, 85% humidity, 96h) has a thermal resistance that is not 1.5 mm²·K/W or more greater than before the highly accelerated stress test.

Such a thermal conductive silicone composition can sustain the thermal resistance performance over a long period of time.

Preferably, a cured product of the thermal conductive silicone composition made by curing the thermal conductive silicone composition sandwiched between two glass plates at 150°C for 60 minutes has no observed voids after being subjected to five-times repeated steps of heating the cured product at 260°C for 5 minutes.

Such a thermal conductive silicone composition can inhibit the generation of voids even at high temperatures.

Preferably, a cured product of the thermal conductive silicone composition has a hardness at 25°C of 10 or more on the Asker C scale.

A cured product of such a thermal conductive silicone composition after heating does not become brittle and break.

Preferably, a cured product of the thermal conductive silicone composition after being subjected to a heating test of repeating three times a step of placing the cured product in a chamber at 260°C for 5 minutes and then removing the cured product has a tensile modulus that is not increased by 20 MPa or more from before the heating test.

Such a thermal conductive silicone composition can inhibit an increase in tensile modulus even when exposed to high temperatures.

### ADVANTAGEOUS EFFECTS OF INVENTION

As described above, the inventive thermal conductive silicone composition can provide a thermal conductive silicone composition with high thermal conductivity that does deteriorate in thermal resistance even when exposed to high temperatures and high humidity, does not experience an increase in elastic modulus even when exposed to high temperatures, and does not generate voids.

### DESCRIPTION OF EMBODIMENTS

As mentioned earlier, a need has existed for the development of a thermal conductive silicone composition with high thermal conductivity that does not experience a detrimental increase in thermal resistance even when exposed to high temperatures and high humidity, does not experience an increase in elastic modulus even when exposed to high temperatures, and does not generate voids, as well as a cured product thereof.

The present inventors have earnestly studied on the above problem and consequently found that, in order to achieve the above object, loading a filler containing one or more thermal conductive powders and further loading an organosilane having a long chain alkyl group represented by the general formula (2) into an addition reaction-curable silicone composition containing (A) an organopolysiloxane having at least two alkenyl groups per molecule and (B) an organohydrogen polysiloxane having at least two silicon atom-bonded hydrogen atoms per molecule can increase the amount of filler loaded and consequently yield a sufficient thermal conductivity and can also yield a thermal conductive silicone composition does not deteriorate in thermal resistance even when exposed to high temperatures and high humidity and does not generate voids even when exposed to high temperatures. This finding has led to the completion of the present invention.

That is, the present invention is a thermal conductive silicone composition comprising:
(A) an organopolysiloxane having at least two alkenyl groups per molecule: 100 parts by mass;
(B) an organohydrogen polysiloxane having at least two silicon atom-bonded hydrogen atoms per molecule: in an amount such that a ratio of the number of Si-H groups in the component (B) to the number of alkenyl groups in the component (A) ((the number of Si-H groups) / (the number of alkenyl groups)) is 0.5 to 3.0;
(C) a filler containing one or more thermal conductive powders: 800 to 20,000 parts by mass;
(D) a hydrolyzable organopolysiloxane represented by the following general formula (1): 20 to 400 parts by mass: 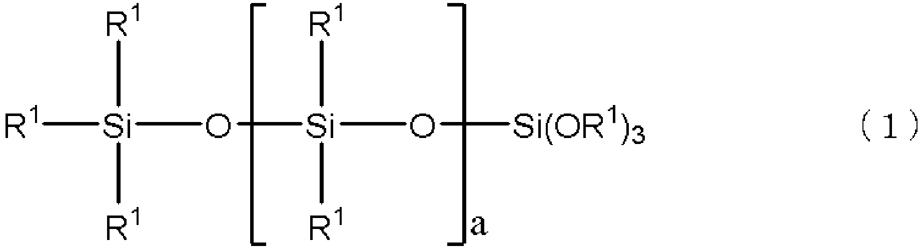 wherein R¹ represents a monovalent hydrocarbon group of 1 to 10 carbon atoms optionally containing a substituent, each R¹ may be the same or different, and "a" is 5 to 100;
(E) an organosilane represented by the following general formula (2): 0.01 to 100 parts by mass:

   R²_{b}Si(OR³)_{4-b} (2)

   wherein R² is one or more groups selected from saturated or unsaturated monovalent hydrocarbon groups, epoxy groups, and (meth)acrylic groups of 14 to 20 carbon atoms optionally containing a substituent, R³ is an alkyl group of 1 to 6 carbon atoms, and "b" is an integer of 1 to 3;
(F) a platinum or platinum compound catalyst: in an amount of 0.1 to 500 ppm as platinum atoms relative to the component (A); and
(G) a reaction regulator: 0.01 to 1 parts by mass.

The present invention is now detailed below; however, the present invention is not limited to the description given below.

### Thermal Conductive Silicone Composition

### (Component (A))

The organopolysiloxane as the component (A) constituting the inventive thermal conductive silicone composition has, per molecule, at least two alkenyl groups directly bonded to silicon atoms. The organopolysiloxane may be linear or branched, or may be a mixture of two or more compounds with different viscosities.

Examples of the alkenyl groups include vinyl, allyl, propenyl, isopropenyl, 1-butenyl, 1-hexenyl, cyclohexenyl, and octenyl groups. Further examples include substituted forms of these groups in which some or all of the hydrogen atoms are substituted with halogen atoms such as fluorine, bromine, and chlorine, a cyano group, or the like, e.g., a chloromethyl group, a chloropropyl group, a bromoethyl group,a 3,3,3-trifluoropropyl group, and a cyanoethyl group. A vinyl group is particularly preferred in terms of ease of synthesis and cost efficiency.

Examples of residual functional groups bonded to silicon atoms include alkyl groups such as methyl, ethyl, propyl, isopropyl, butyl, isobutyl, tert-butyl, pentyl, neopentyl, hexyl, cyclohexyl, octyl, nonyl, decyl, and dodecyl groups, aryl groups such as phenyl, tolyl, xylyl, and naphthyl groups, and aralkyl groups such as benzyl, phenylethyl, and 2-phenylpropyl groups. Among these, a methyl group is particularly preferred in terms of ease of synthesis and cost efficiency.

In this case, at least two of the groups must be alkenyl groups (preferably those of 2 to 8 carbon atoms, more preferably 2 to 6 carbon atoms). While there is no particular upper limit to the number of alkenyl groups, it depends on the composition of the molecules of the organopolysiloxane as the component (A) and is typically 9. The alkenyl group may be bonded to a silicon atom at the end of the molecular chain, bonded to a silicon atom in the middle of the molecular chain, or bonded to both silicon atoms. However, in view of factors such as curing rate of the composition and physical properties of the cured product, it is preferable that the organopolysiloxane used in the present invention at least contains an alkenyl group bonded to a silicon atom at the end of the molecular chain.

The viscosity of the organopolysiloxane as the component (A) at 25°C is preferably, but not limited to, in the range of 10 to 100,000 mm²/s, more preferably in the range of 100 to 80,000 mm²/s, because the viscosity of 10 mm²/s or more ensures good storage stability of the composition and the viscosity of 100,000 mm²/s or less ensures good extensibility of the resulting composition.

The kinematic viscosity as referred to in the present invention is a value at 25°C as measured by an Ubbelohde Ostwald viscometer (the same applies hereinafter).

### (Component (B))

The component (B) is an organohydrogen polysiloxane having at least two silicon atom-bonded hydrogen atoms per molecule, represented by the following average composition formula (3). The number of silicon atom-bonded hydrogen atoms that this organohydrogen polysiloxane has per molecule is preferably 3 to 100, more preferably 3 to 50, and even more preferably 3 to 20.

R⁴_{c}H_{d}SiO_{(4-c-d)/2} (3)

wherein R⁴ is an unsubstituted or substituted monovalent hydrocarbon group having no aliphatic unsaturated bonds, "c" is a positive number of 0.7 to 2.2, and "d" is a positive number of 0.001 to 0.5, with c + d being 0.8 to 2.5.

In the above formula (3), R⁴ is independently an unsubstituted or substituted monovalent hydrocarbon group containing no aliphatic unsaturated bonds. The number of carbon atoms therein is typically preferably, but not limited to, 1 to 10, more preferably 1 to 6. Specific examples include alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; and these groups in which some or all of the hydrogen atoms are substituted with halogen atoms such as chlorine, bromine, and fluorine, e.g., a 3,3,3-trifluoropropyl group. Among these, alkyl, aryl, and 3,3,3-trifluoropropyl groups are preferred, and methyl, phenyl, and 3,3,3-trifluoropropyl groups are particularly preferred.

Preferably, "c" is a positive number of 0.7 to 2.2, more preferably 1.0 to 2.1. Preferably, "d" is a positive number of 0.001 to 0.5, more preferably 0.005 to 0.1. Preferably, c + d is in the range of 0.8 to 2.5, more preferably in the range of 1.0 to 2.5, and even more preferably in the range of 1.5 to 2.2.

The number of silicon atoms per molecule of the organohydrogen polysiloxane as the component (B) (i.e., degree of polymerization) is typically preferably, but not limited to, 10 to 1,000 and, in view of providing good handleability of the composition and good properties of the resulting cured product, more preferably 20 to 500, and even more preferably 20 to 100.

The molecular structure of the organohydrogen polysiloxane as the component (B) is not limited as long as it meets the above requirements. The viscosity of the organohydrogen polysiloxane as the component (B) is typically preferably, but not limited to, 1 to 10,000 Pa·s, more preferably 3 to 2,000 Pa·s, and even more preferably 10 to 1,000 Pa·s. The organohydrogen polysiloxane is preferably in a liquid state at room temperature (25°C).

Examples of the organohydrogen polysiloxane represented by the above formula (3) include methylhydrogensiloxane-dimethylsiloxane cyclic copolymers, methylhydrogen polysiloxane capped at both ends with dimethylhydrogen siloxy groups, methylhydrogen-dimethylsiloxane copolymers capped at both ends with dimethylhydrogen siloxy groups, methylhydrogen-diphenylsiloxane copolymers capped at both ends with dimethylhydrogen siloxy groups, methylhydrogen-dimethylsiloxane-diphenylsiloxane copolymers capped at both ends with dimethylhydrogen siloxy groups, methylhydrogen polysiloxane capped at both ends with trimethylsiloxy groups, dimethylsiloxane-methylhydrogensiloxane copolymers capped at both ends with trimethylsiloxy groups, methylhydrogensiloxane-diphenylsiloxane copolymers capped at both ends with trimethylsiloxy groups, methylhydrogensiloxane-diphenylsiloxane-dimethylsiloxane copolymers capped at both ends with trimethylsiloxy groups, copolymers consisting of (CH₃) ₂HSiO_{1/2} units, (CH₃)₂HSiO units, and CH₃SiO_{3/2} units, copolymers consisting of (CH₃)₂HSiO_{1/2} units, (C₆H₅)₂SiO units, (CH₃)₂SiO units, and CH₃SiO_{3/2} units, copolymers consisting of (CH₃) (C₆H₅)HSiO_{1/2} units, (CH₃)₂SiO units, and CH₃SiO_{3/2} units, copolymers consisting of (CH₃) ₂HSiO_{1/2} units, (CH₃)₂SiO units, and C₆H₅SiO_{3/2} units, copolymers consisting of (CH₃)(CF₃C₂H₄)HSiO_{1/2} units, (CH₃) (CF₃C₂H₄)SiO units, and CH₃SiO_{3/2} units, copolymers consisting of (CH₃)(CF₃C₂H₄)HSiO_{1/2} units, (CH₃) (CF₃C₂H₄)SiO units, (CH₃)₂SiO units, and CH₃SiO_{3/2} units, copolymers consisting of (CH₃)₂HSiO_{1/2} units, (CH₃)(CF₃C₂H₄) SiO units, and CH₃SiO_{3/2} units, copolymers consisting of (CH₃)₂HSiO_{1/2} units, (CH₃)(CF₃C₂H₄)SiO units, (CH₃)₂SiO units, and CH₃SiO_{3/2} units, and copolymers consisting of (CH₃)₂HSiO_{1/2} units, (CH₃)(CF₃C₂H₄)SiO units, (CH₃)₂SiO units, and (CF₃C₂H₄)SiO_{3/2} units.

The organohydrogen polysiloxane as the component (B) may be a single component or a mixture of two or more components. The organohydrogen polysiloxane is synthesized by any conventional, well-known method.

The amount of the component (B) loaded must be such that a ratio of the number of Si-H groups in the component (B) to the number of alkenyl groups in the component (A), i.e., (the number of Si-H groups)/(the number of alkenyl groups in the component (A)), is in the range of 0.5 to 3.0, preferably in the range of 0.6 to 2.0. If the ratio is less than 0.5, the composition will fail to form a satisfactory network structure and to have a required hardness after curing, potentially leading to generation of voids. If the ratio is greater than 3.0, unreacted Si-H groups will undergo excessive crosslinking reaction with moisture or the like and will be hardened, leading to loss of flexibility of the composition and significant deterioration in thermal resistance after a highly accelerated stress test.

### (Component (C))

The filler as the component (C) of the present invention is used to impart thermal conductivity to the inventive composition and contains one or more thermal conductive powders. The component (C) preferably contains a thermal conductive powder with a thermal conductivity of 10 W/m·°C or more. This is because the thermal conductivity of the composition can be sufficiently ensured if the component (C) has a thermal conductivity of 10 W/m·°C or more.

An aluminum powder and a zinc oxide powder are preferably used for the filler as the component (C) of the present invention. An average particle size of the aluminum powder is preferably, but not limited to, in the range of 0.1 to 100 µm, more preferably in the range of 1 to 50 um. With the average particle size of 0.1 um or greater, the viscosity of the resulting composition will not be too high, ensuring extensibility. With the average particle size of 100 um or smaller, the resulting composition will not be non-uniform.

An average particle size of the above zinc oxide powder is preferably, but not limited to, in the range of 0.1 to 5 um, more preferably in the range of 1 to 4 um. With the average particle size of 0.1 um or greater, the viscosity of the resulting composition will not be too high, ensuring extensibility, and with the average particle size of 5 um or smaller, the resulting composition will not be non-uniform. The aluminum and zinc oxide powders may be either spherical or irregular-shaped.

The thermal conductivities of the aluminum and zinc oxide powders as the above thermally conductive powders are about 237 W/m·K and 20 W/m·K, respectively, providing a high thermal conductivity. Accordingly, it is preferable to use these minerals as the filler. While the aluminum powder may be used alone for the filler as the component (C) of the present invention, mixing it with the zinc oxide powder can inhibit oil separation and maintain the stability of the resulting composition. The ratio of the aluminum powder to the zinc oxide powder is preferably, but not limited to, in the range of 1:1 to 10:1, more preferably in the range of 2:1 to 8:1 by weight. With the aluminum powder ratio of 1:1 or higher, the thermal conductivity of the resulting composition will not be low, and with the aluminum powder ratio of 10:1 or lower, oil separation over time can be better inhibited.

The amount of these fillers loaded is 800 to 20,000 parts by mass, preferably 850 to 7,000 parts by mass, relative to 100 parts by mass of the component (A). If the amount loaded is less than 800 parts by mass, the resulting composition will have a poor thermal conductivity, and if the amount loaded is more than 20,000 parts by mass, it will be difficult to create a paste of the composition.

### (Component (D))

The component (D) of the present invention is a hydrolyzable organopolysiloxane represented by the following general formula (1): 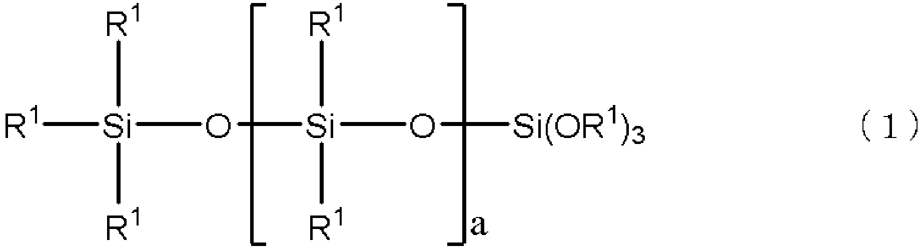 wherein R¹ represents a monovalent hydrocarbon group of 1 to 10 carbon atoms optionally containing a substituent, each R¹ may be the same or different, and "a" is 5 to 100.

This is used as a wetter. Since the component (A) has a poor wettability to the filler, the filler cannot be loaded in a sufficient amount unless the wetter is added and mixed. Investigations have revealed that adding the organopolysiloxane of the above general formula (1) can significantly increase the amount of filler loaded. In the general formula (1), R¹ is an alkyl group of 1 to 10 carbon atoms, preferably 1 to 6 carbon atoms. Specific examples include methyl, ethyl, propyl, isopropyl, butyl, sec-butyl, tert-butyl, pentyl, and hexyl groups.

In the composition formula (1), "a" is 5 to 100, preferably 10 to 60. If "a" is less than 5, the composition will suffer from significant oil bleeding, potentially leading to generation of voids. If "a" is greater than 100, the composition will have a high viscosity, potentially worsening the handleability. The amount added is 20 to 400 parts by mass, preferably 40 to 200 parts by mass, relative to the total amount of the composition. If the amount added is less than 20 parts by mass relative to the total amount, the composition may have insufficient wettability. If the amount added is greater than 400 parts by mass relative to the total amount, the composition will suffer from significant oil bleeding, potentially leading to generation of voids.

### (Component (E))

The component (E) of the present invention is an organosilane shown by the following general formula (2):

R²_{b}Si(OR³)_{4-b} (2)

wherein R² is one or more groups selected from saturated or unsaturated monovalent hydrocarbon groups, epoxy groups, and (meth)acrylic groups of 14 to 20 carbon atoms optionally containing a substituent, R³ is an alkyl group of 1 to 6 carbon atoms, and "b" is an integer of 1 to 3.

Similarly to the component (D), the above component has been found to be effective as a wetter to significantly increase the amount of filler loaded and also effective in significantly inhibiting deterioration in thermal resistance even under exposure to high temperatures and high humidity.

In the above formula (2), R² is one or more groups selected from saturated or unsaturated monovalent hydrocarbon groups of 14 to 20 carbon atoms optionally containing a substituent, epoxy groups, and (meth)acrylic groups, and is preferably an alkyl group of 14 to 20 carbon atoms, more preferably an alkyl group of 16 to 20 carbon atoms, and even more preferably an alkyl group of 16 to 18 carbon atoms. Examples include hexadecyl and octadecyl groups. If the number of carbon atoms is less than 14, the organosilane is likely to volatilize, potentially leading to generation of voids at high temperatures. If the number of carbon atoms is greater than 20, the organosilane solidifies at room temperature, making it difficult to handle and also reducing the low-temperature properties of the resulting composition. While "b" is an integer of 1 to 3, it is preferably 1. R³ in the above formula (2) is an alkyl group of 1 to 6 carbon atoms, with a methyl or ethyl group being particularly preferred.

Specific examples of the organosilane as the above component (E) represented by the above general formula (2) include the following:

C₁₄H₂₉Si(OCH₃)₃

C₁₆H₃₃Si(OCH₃)₃

C₁₈H₃₇Si(OCH₃)₃

C₂₀H₄₁Si(OCH₃)₃

C₁₆H₃₃Si(OC₂H₅)₃

C₁₈H₃₇Si(OC₂H₅)₃

The amount of the above component (E), organosilane, loaded is in the range of 0.01 to 100 parts by mass, preferably in the range of 10 to 70 parts by mass, relative to 100 parts by mass of the component (A). If the amount loaded is less than 0.01 parts by mass, the composition will have poor wettability and be unable to maintain flexibility when exposed to high temperatures and high humidity for a long period of time. Loading the component in an amount greater than 100 parts by mass does not provide further effects and is less economical, and this may even lead to generation of voids at high temperatures.

### (Component (F))

The catalyst as the component (F), which is selected from platinum and platinum compounds, is a component to promote addition reaction between the alkenyl groups in the component (A) and the Si-H groups in the component (B). Examples of the component (F) include elemental platinum, chloroplatinic acid, platinum-olefin complexes, platinum-alcohol complexes, and platinum coordination compounds. The amount of the component (F) loaded is in the range of 0.1 to 500 ppm, preferably in the range of 1 to 200 ppm, as platinum atoms relative to 100 parts by mass of the component (A). If the amount loaded is less than 0. 1 ppm, no catalytic effect will be exhibited. Loading the component in an amount greater than 500 ppm is not expected to provide a particular improvement in curing rate.

### (Component (G))

The reaction regulator as the component (G) serves to inhibit the progress of hydrosilylation reaction at room temperature and thus extend shelf life and pot life. Any well-known compound may be used for the reaction regulator as the component (G), such as acetylene compounds, various nitrogen compounds, organophosphorus compounds, oxime compounds, and organic chlorine compounds. The amount of the component (G) loaded is in the range of 0.01 to 1 part by mass, preferably in the range of 0.1 to 0.8 parts by mass, relative to 100 parts by mass of the component (A). If the amount loaded is less than 0.01 parts by mass, a satisfactory shelf life or pot life will not be obtained. If the amount loaded is greater than 1 part by mass, curability will be lowered.

In addition to the above components (A) to (G), the inventive thermal conductive silicone composition may have added thereto an adhesion aid or the like for chemically bonding and securing the IC package such as a CPU to the heat dissipator such as a heat sink, and an antioxidant or the like for preventing deterioration, if necessary.

The inventive thermal conductive silicone composition is obtained by mixing the components (A) to (G) and other optional components, and can be stored at low temperatures for a long period of time as a one-part addition type composition.

### Method for Producing Thermal Conductive Silicone Composition

The inventive thermal conductive silicone composition can be prepared by mixing the above components. There is no particular limitation to the order of addition of the components, and the composition can be prepared by mixing the components (A) to (G) and, if necessary, other components. For example, a part containing the components (A), (C), and (D) and another part containing the component (B) can be prepared separately, and then the two parts can be mixed.

The components of the inventive silicone composition may be mixed at room temperature or may be heated before mixing. The temperature during mixing is preferably 25 to 200°C, more preferably 50 to 180°C. Degassing may also be performed during heating or during mixing at 25°C.

### Physical Properties of Thermal Conductive Silicone Composition

The viscosity of the inventive silicone composition is preferably 50 to 1000 Pa·S, more preferably 100 to 700 Pa·S, and even more preferably 150 to 400 Pa·S when measured at 25°C with a Malcom rotational viscometer (rotation speed: 10 rpm). The viscosity of 50 Pa·S or more prevents the thermal conductive filler from settling during storage and making the composition non-uniform. The viscosity of 1000 Pa·S or less ensures extensibility and avoids any reduction in work efficiency.

A cured product of the inventive silicone composition after being subjected to a highly accelerated stress test (130°C, 85% humidity, 96h) has a thermal resistance that is not detrimentally increased by 1.5 mm²·K/W or more from before the test. As such, the cured product can sustain its thermal resistance performance over a long period of time. The lower the thermal resistance, the better the thermal performance, so that there is no problem with how much it decreases from before the test to after the test.

The inventive silicone composition can inhibit generation of voids even at high temperatures. A cured product of the inventive silicone composition made by curing the composition sandwiched between two glass plates at 150°C for 60 minutes has no observed voids even after being subjected to five-times repeated heating at 260°C for 5 minutes.

The cured product of the inventive silicone composition can inhibit an increase in tensile modulus even when exposed to high temperatures. The cured product after being subjected to a heating test of repeating three times a step of placing the cured product in a chamber at 260°C for 5 minutes and then removing it from the chamber has a tensile modulus that is not increased by 20 MPa or more from before the heating test. The less the change in tensile modulus from before the heating test, the better a certain thermal performance can be maintained, so that there is no problem with how little the change is.

The cured product of the inventive silicone composition has a hardness of preferably 10 or more, more preferably 20 to 90, and even more preferably 30 to 85, when measured at 25°C on the Asker C scale. The hardness of 10 or more ensures that the cured product does not become brittle after the heating test and is free from the risk of breakage.

### EXAMPLES

The present invention is now further detailed with reference to Examples and Comparative Examples, though the present invention is not limited to these examples.

First, the following components were provided.

### Component (A)

A-1: Dimethylpolysiloxane capped at both ends with dimethylvinylsilyl groups and having a viscosity at 25°C of 600 mm²/s
A-2: Dimethylpolysiloxane capped at both ends with dimethylvinylsilyl groups and having a viscosity at 25°C of 30,000 mm²/s
A-3: Dimethylpolysiloxane capped at both ends with tribinylsilyl groups and having a viscosity at 25°C of 1,500 mm²/s

### Component (B)

B-1: Organohydrogen polysiloxane having two silicon atom-bonded hydrogen atoms on the side chain and having a viscosity of 30 mm²/s
B-2: Organohydrogen polysiloxane having silicon atom-bonded hydrogen atoms at both ends and two silicon atom-bonded hydrogen atoms on the side chain and having a viscosity of 40 mm²/s

### Component (C)

C-1: Aluminum powder with an average particle size of 10 µm
C-2: Zinc oxide powder with an average particle size of 0.25 um

### Component (D)

D-1: Organohydrogen polysiloxane represented by the following formula:

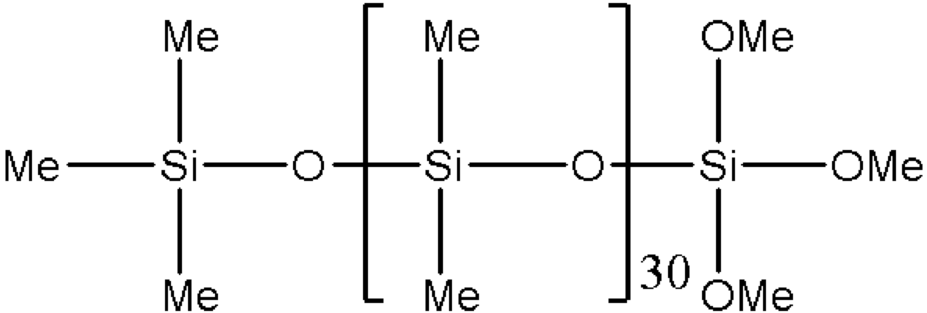

### Component (E)

E-1: C₁₀H₂₁Si(OCH₃)₃ (for Comparative Examples)
E-2: C₁₂H₂₅Si(OCH₃)₃ (for Comparative Examples)
E-3: C₁₆H₃₃Si(OCH₃)₃
E-4: C₁₈H₃₇Si(OCH₃)₃

### Component (F)

F-1: Platinum-divinyltetramethyldisiloxane complex with a platinum concentration of 1 mass%.

### Component (G)

G-1: 1-ethynyl-1-cyclohexanol

The above components (A) to (G) components were mixed as follows to obtain thermal conductive silicone compositions of Examples 1 to 7 and Comparative Examples 1 to 8. Specifically, the components (A), (C), (D), and (E) were put into a 5 L planetary mixer (available from Inoue Manufacturing Co., Ltd.) and mixed at 170°C for 90 minutes. The mixture was cooled to room temperature, followed by adding the components (B), (F), and (G), with mixing for 15 minutes for each addition.

The resulting compositions were evaluated for their properties using the following methods. The results are shown in Tables 1 and 2.
(1) Viscosity: the viscosity at 25°C was measured using a Malcolm rotational viscometer (rotation speed: 10 rpm) .
(2) Thermal conductivity: the thermal conductivity at 25°C of each composition before curing was measured using a TPS-2500S thermophysical property measuring apparatus available from by Kyoto Electronics Manufacturing Co., Ltd.
(3) Thermal resistance: each composition was sandwiched between a 15 mm x 15 mm x 1 mmt Si chip and a 15 mm x 15 mm x 1 mmt Ni plate and cured at 150°C for 60 minutes to prepare a test piece for thermal resistance measurement, and the thermal resistance of each test piece was measured. Each test piece was then placed in a chamber at 130°C and 85% humidity for 96 hours to conduct a highly accelerated stress test. After the highly accelerated stress test, the thermal resistance was measured, and the thermal resistances before and after the highly accelerated stress test were compared. The thermal resistance measurement was performed using a NanoFlash apparatus (LFA447, available from Netzsch) .
(4) Void test: each composition was sandwiched between two glass plates, with both ends clipped by clips, and cured at 150°C for 60 minutes. The composition was then subjected five times to heating at 260°C for 5 minutes, followed by visually checking the appearance of the composition sandwiched between the glass plates. No voids in the composition: good Voids in the composition: poor
(5) Tensile modulus: each silicone composition was cured at 150°C for 60 minutes into a 2-mm thick sheet, and its tensile modulus at 25°C was measured using an ARES-G2 apparatus available from TA Instruments. The cured product of each silicone composition was then subjected to a heating test of repeating three times a step of placing the cured product in a high-temperature chamber (STH-120 high-temperature compact chamber available from ESPEC Corp.) at 260°C for 5 minutes and then removing it from the high-temperature chamber and returning it to room temperature. Thereafter, the tensile modulus at 25°C was measured using the same apparatus as described above.
(6) Hardness: each silicone composition was cured at 150°C for 60 minutes, followed by measuring the hardness at 25°C on the Asker C scale.

**[Table 1]**

| Component (parts by mass) | Ex. 1 | Ex.2 | Ex. 3 | Ex. 4 | Ex. 5 | Ex . 6 | Ex. 7 |
|---|---|---|---|---|---|---|---|
| A-1 | 65 | 65 | 65 | 65 | 65 | 65 | 65 |
| A-2 | 20 | 20 | 20 | 20 | 20 | 20 | 20 |
| A-3 | 15 | 15 | 15 | 15 | 15 | 15 | 15 |
| B-1 | 2.9 | 4.8 | 4.8 | 4.8 | | 4.8 | 4.8 |
| B-2 | 7.1 | 11.8 | 11.8 | 11.8 | 20.1 | 11.8 | 11.8 |
| No. of Si-H in composition(B)/ No. of Si-Vi in composition(A) | 0.9 | 1.5 | 1.5 | 1.5 | 2.0 | 1.5 | 1.5 |
| C-1 | 4573 | 4573 | 4573 | 4573 | 4573 | 5600 | 4573 |
| C-2 | 999 | 999 | 999 | 999 | 999 | 1260 | 999 |
| D-1 | 320 | 320 | 320 | 320 | 320 | 400 | 320 |
| E-3 | | | | | | | 26* |
| E-4 | 22 | 22 | 29* | 100 | 29* | 29* | |
| F-1 | 1.08 | 1.08 | 1.08 | 1.08 | 1.08 | 1.08 | 1.08 |
| Pt atoms relative to composition(A) (ppm) | (108) | (108) | (108) | (108) | (108) | (108) | (108) |
| G-1 | 0.23 | 0.23 | 0.23 | 0.23 | 0.23 | 0.23 | 0.23 |
| Viscosity (Pa·s) | 200 | 190 | 195 | 150 | 205 | 340 | 219 |
| Thermal conductivity (W/m·K) | 6.3 | 6.2 | 6.2 | 6.0 | 6.0 | 6.8 | 6.3 |
| Thermal resistance before HAST (mm²·K/W) | 5.5 | 5.1 | 5.6 | 5.5 | 6.6 | 6.5 | 5.9 |
| Thermal resistance after HAST (mm²·K/W) | 4. 9 | 4.7 | 5.4 | 5.2 | 6.8 | 6.7 | 5.7 |
| Void test | Good | Good | Good | Good | Good | Good | Good |
| Tensile modulus before heating test (Mpa) | 7 | 30 | 27 | 33 | 50 | 56 | 32 |
| Tensile modulus after heating test (Mpa) | 10 | 38 | 29 | 30 | 52 | 60 | 42 |
| Hardness (AskerC) | 14 | 48 | 46 | 53 | 67 | 66 | 46 |

**[Table 2]**

| Component (parts by mass) | Comp. Ex. 1 | Comp. Ex. 2 | Comp. Ex. 3 | Comp. Ex.4 | Comp. Ex. 5 | Comp. Ex. 6 | Comp. Ex. 7 | Comp. Ex.8 |
|---|---|---|---|---|---|---|---|---|
| A-1 | 65 | 65 | 65 | 65 | 65 | 65 | 65 | 65 |
| A-2 | 20 | 20 | 20 | 20 | 20 | 20 | 20 | 20 |
| A-3 | 15 | 15 | 15 | 15 | 15 | 15 | 15 | 15 |
| B-1 | 2.9 | 2.9 | 2.9 | 4.8 | 4 . 8 | 2.9 | | 2.9 |
| B-2 | 7.1 | 7.1 | 7.1 | 11.8 | 11.8 | 7.1 | 5.0 | 7.1 |
| No. of Si-H in composition(B)/ No. of Si-Vi in Composition(A) | 0.9 | 0.9 | 0.9 | 1.5 | 1.5 | 0.9 | 0.4 | 0.9 |
| C-1 | 4573 | 4573 | 4573 | 4573 | 4573 | 18292 | 4573 | 4573 |
| C-2 | 999 | 999 | 999 | 999 | 999 | 3996 | 999 | 999 |
| D-1 | 320 | 320 | 320 | 320 | 320 | 320 | 320 | 320 |
| E-1 | | 20* | | | | | | |
| E-2 | | | 22* | 22* | 5 | | | |
| E-4 | | | | | | 29* | 29* | 120 |
| F-1 | 1.08 | 1.08 | 1.08 | 1.08 | 1.08 | 1.08 | 1.08 | 1.08 |
| Pt atoms relative to Composition(A) (ppm) | (108) | (108) | (108) | (108) | (108) | (108) | (108) | (108) |
| G-1 | 0.23 | 0.23 | 0.23 | 0.23 | 0.23 | 0.23 | 0.23 | 0.23 |
| Viscosity (Pa·s) | 260 | 265 | 234 | 207 | 210 | *2 | 189 | 90 |
| Thermal conductivity (W/m·K) | 6.2 | 6.0 | 6.5 | 6.0 | 6.4 | | 6.4 | 4.6 |
| Thermal resistance before HAST (mm²·K/W) | 6.9 | 5.5 | 4.6 | 5.8 | 5.9 | | 5.5 | 6.2 |
| Thermal resistance after HAST (mm²·K/W) | 12.0 | 9.0 | 5.4 | 6.4 | 8.9 | | 5.4 | 5.1 |
| Void test | Good | Poor | Poor | Good | Good | | Poor | Poor |
| Tensile modulus before heating test (Mpa) | 5 | 5 | 6 | 27 | 25 | | 1 | *3 |
| Tensile modulus after heating test (Mpa) | 10 | *3 | *3 | 60 | 67 | | *3 | *3 |
| Hardness (AskerC) | 16 | 12 | 8 | 48 | 50 | | 6 | 5 |

| | | | | | | | | |
|---|---|---|---|---|---|---|---|---|
| * In Examples 3, 5, 6, and 7 and Comparative Examples 2, 3, 4, 6, and 7, the number of moles of the component (E) is equal. *2 The composition did not form a paste. *3 Measurement was impossible because the cured product became brittle due to void generation and broke during the tensile modulus measurement. | | | | | | | | |

The results in Tables 1 and 2 show that the thermal conductive silicone compositions of Examples 1 to 7, which meet the requirements of the present invention, are thermally conductive, yet maintain low viscosity, have less deterioration in thermal resistance even after the highly accelerated stress test, and have less void generation and less increase in elastic modulus even after the heating test.

On the other hand, in Comparative Example 1, the composition was not loaded with an organosilane with long-chain alkyl groups, so that the thermal resistance increased significantly after the highly accelerated stress test.

In Comparative Example 2, the organosilane had a short alkyl chain length because of the addition of C₁₀H₂₁Si(OCH₃)₃, so that the thermal resistance after the highly accelerated stress test deteriorated significantly and voids occurred during the void test.

In Comparative Example 3, the alkyl chain was not long enough because of the addition of C₁₂H₂₅Si(OCH₃)₃, so that the hardness was low, and voids occurred after the void test, though there was little deterioration in thermal resistance after the highly accelerated stress test.

In Comparative Example 4, C₁₂H₂₅Si(OCH₃)₃ as used in Comparative Example 3 was added and the ratio of (the number of Si-H groups in the component (B)) / (the number of Si-Vi groups in the component (A)) was increased, but the tensile modulus after heating increased significantly.

In Comparative Example 5, the loading amount of C₁₂H₂₅Si(OCH₃)₃ as used in Comparative Examples 3 and 4 was reduced, so that the thermal resistance after the highly accelerated stress test deteriorated, and the tensile modulus after heating increased significantly.

In Comparative Example 6, a large amount of filler was loaded, so that the viscosity increased significantly, and the composition became lumpy rather than forming a paste.

In Comparative Example 7, the ratio of (the number of Si-H groups in the component (B)) / (the number of Si-Vi groups in the component (A)) was too low at less than 0.5 and thus the material strength was insufficient, so that voids were generated after the void test, and also the cured product became brittle when heated, which made the measurement of tensile modulus impossible.

In Comparative Example 8, a large amount of organosilane with long-chain alkyl groups was loaded, so that voids were generated after the void test, and also the cured product became brittle, which made the measurement of tensile modulus impossible.

The results of the above examples show that the inventive thermal conductive silicone composition can provide a thermal conductive silicone composition with high thermal conductivity that does not deteriorate in thermal resistance even when exposed to high temperatures and high humidity, does not experience an increase in elastic modulus even when exposed to high temperatures, and does not generate voids.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A thermal conductive silicone composition comprising:
(A) an organopolysiloxane having at least two alkenyl groups per molecule: 100 parts by mass;
(B) an organohydrogen polysiloxane having at least two silicon atom-bonded hydrogen atoms per molecule: in an amount such that a ratio of the number of Si-H groups in the component (B) to the number of alkenyl groups in the component (A) ((the number of Si-H groups) / (the number of alkenyl groups)) is 0.5 to 3.0;
(C) a filler containing one or more thermal conductive powders: 800 to 20,000 parts by mass;
(D) a hydrolyzable organopolysiloxane represented by the following general formula (1): 20 to 400 parts by mass: 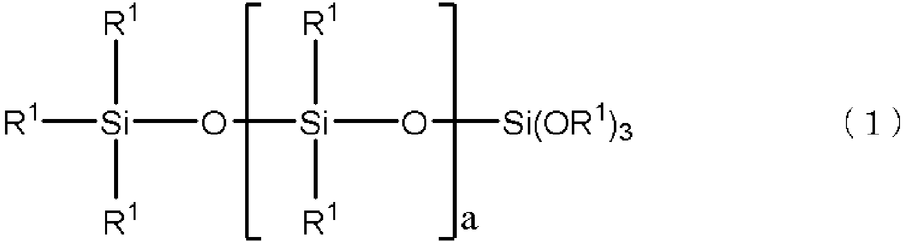 wherein R¹ represents a monovalent hydrocarbon group of 1 to 10 carbon atoms optionally containing a substituent, each R¹ may be the same or different, and "a" is 5 to 100;
(E) an organosilane represented by the following general formula (2): 0.01 to 100 parts by mass:
R²_{b}Si(OR³)_{4-b} (2)
wherein R² is one or more groups selected from saturated or unsaturated monovalent hydrocarbon groups, epoxy groups, and (meth)acrylic groups of 14 to 20 carbon atoms optionally containing a substituent, R³ is an alkyl group of 1 to 6 carbon atoms, and "b" is an integer of 1 to 3;
(F) a platinum or platinum compound catalyst: in an amount of 0.1 to 500 ppm as platinum atoms relative to the component (A); and
(G) a reaction regulator: 0.01 to 1 parts by mass.

2. The thermal conductive silicone composition according to claim 1, wherein the component (A) has a viscosity at 25°C of 10 to 100,000 mm²/s.

3. The thermal conductive silicone composition according to claim 1 or 2, wherein the component (C) contains an aluminum powder and a zinc oxide powder.

4. The thermal conductive silicone composition according to any one of claims 1 to 3, wherein R² of the component (E) is an alkyl group of 14 to 20 carbon atoms.

5. The thermal conductive silicone composition according to any one of claims 1 to 4, wherein R² of the component (E) is an alkyl group of 16 to 20 carbon atoms.

6. The thermal conductive silicone composition according to any one of claims 1 to 5, wherein the component (G) contains one or more of acetylene compounds, nitrogen compounds, organophosphorus compounds, oxime compounds, and organochloro compounds.

7. The thermal conductive silicone composition according to any one of claims 1 to 6, wherein the thermal conductive silicone composition has a viscosity at 25°C in a range of 50 to 1,000 Pa·s.

8. The thermal conductive silicone composition according to any one of claims 1 to 7, wherein a cured product of the thermal conductive silicone composition after being subjected to a highly accelerated stress test (130°C, 85% humidity, 96h) has a thermal resistance that is not 1.5 mm²·K/W or more greater than before the highly accelerated stress test.

9. The thermal conductive silicone composition according to any one of claims 1 to 8, wherein a cured product of the thermal conductive silicone composition made by curing the thermal conductive silicone composition sandwiched between two glass plates at 150°C for 60 minutes has no observed voids after being subjected to five-times repeated steps of heating the cured product at 260°C for 5 minutes.

10. The thermal conductive silicone composition according to any one of claims 1 to 9, wherein a cured product of the thermal conductive silicone composition has a hardness at 25°C of 10 or more on the Asker C scale.

11. The thermal conductive silicone composition according to any one of claims 1 to 10, wherein a cured product of the thermal conductive silicone composition after being subjected to a heating test of repeating three times a step of placing the cured product in a chamber at 260°C for 5 minutes and then removing the cured product has a tensile modulus that is not increased by 20 MPa or more from before the heating test.
